Europäisches Patentamt

European Patent Office

Office européen des brevets

(19)

(11) Veröffentlichungsnummer: **0 215 151 B1**

(12) **EUROPÄISCHE PATENTSCHRIFT**

(45) Veröffentlichungstag der Patentschrift:
03.01.90

(51) Int. Cl.⁴: **G21C 1/06**

(21) Anmeldenummer: 85111804.2

(22) Anmeldetag: 18.09.85

(54) **Kugelhaufenreaktor mit Batch-Betrieb.**

(43) Veröffentlichungstag der Anmeldung:
25.03.87 Patentblatt 87/13

(45) Bekanntmachung des Hinweises auf die Patenterteilung:
03.01.90 Patentblatt 90/1

(84) Benannte Vertragsstaaten:
CH DE LI

(56) Entgegenhaltungen:
BE-A- 668 635
DE-A- 3 114 480
GB-A- 938 120
GB-A- 1 056 246
US-A- 3 321 376

(73) Patentinhaber: **Kernforschungsanlage Jülich Gesellschaft mit beschränkter Haftung, Postfach 1913, D-5170 Jülich 1(DE)**

(72) Erfinder: **Teuchert, Eberhardt, Dr., Franziskusstrasse 2, D-5170 Jülich(DE)**
Erfinder: **Haas, Klaus-Arne, Münsterweg 4, D-5160 Düren(DE)**
Erfinder: **Gerwin, Helmut, Dr., Otto-Hahn-Strasse 3, D-5170 Jülich(DE)**

## Beschreibung

Die Erfindung bezieht sich auf einen Kugelhaufenkernreaktor mit chargenweiser Be- und Entladung der Core-Kaverne (Batch-Betrieb).

Kugelhaufenkernreaktoren werden gewöhnlich im Durchlaufbetrieb gefahren, d.h. aus dem Druckbehälter des Cores werden fortlaufend mehr oder minder abgebrannte Kugeln ausgeschleust während durch Beschickungsrohre im Deckenreflektor neue Brennelemente zugeführt werden. Das Be- und Entladen geschieht unter vollem Leistungsbetrieb des Reaktors, ggf. quasi kontinuierlich, wobei die Zeitabstände zwischen zwei Beschickungsvorgängen so kurz gewählt werden, daß keine wesentlichen Reaktivitätsschwankungen auftreten.

Diese Art des Reaktorbetriebes hat den Vorteil, daß im Core im wesentlichen nur die der Kritikalität entsprechende Brennstoffmenge vorhanden ist.

Der Nachteil dieser Betriebsweise besteht in der Notwendigkeit, erhebliche bauliche Vorkehrungen für den Brennelementabzug unter vollem Leistungsbetrieb vorzusehen. Diese Einrichtungen sind für Reparaturen schwer zugänglich und erfordern beständige Überwachung, geschulte Bedienung und ggf. Wartung durch qualifiziertes Personal.

Aus diesem Grunde wird von der Anmelderin in einer gleichzeitig eingereichten Patentanmeldung EP-A1 0 215 152 eine neue Core-Beschickungsart beschrieben, bei der anfänglich nur eine Teilbeschickung der Kaverne mit Brennelementen entsprechend erhöhten Spaltstoffgehalts stattfindet, die für die Kritikalität unter der vorgesehenen Leistung ausreicht und bei der mit zunehmenden Abbrand Brennelemente nachgeladen werden, insbesondere bis zur vollständigen Füllung der Kaverne.

Bei einer solchen Beschickungsart kann die Core-Entladung nach vollständiger Füllung der Kaverne nach Stillegung und Abkühlung des Reaktors von oben her erfolgen. Daneben wurden auch bereits Kugelhaufenreaktoren mit einfachem Batch-Betrieb in Erwägung gezogen.

Die Entladung solcher Kugelhaufenreaktoren findet vergleichsweise selten statt (etwa nach 2 bis 5 Betriebsjahren, bei Reaktoren mit kleinen Leistungsdichten, die als Heizwerke konzipiert werden können, nach etwa 15- bis 30jährigem Betrieb), d.h. die Brennelementkugeln bleiben über lange Zeit hinweg unverändert im Core, in der durch Beschickungsvorgang erzielten Ordnung.

In solchen "im wesentlichen" ruhenden Kugelschüttungen sind thermisch- und abbrandbedingte Expansionen der Kugeln zu erwarten, die zu einer Verdichtung der Kugelschüttung und zu erheblichen Druckbelastungen auf die seitliche Wandung der Kaverne führen müssen.

Der Erfindung liegt daher die Aufgabe zugrunde, unzulässig hohe Druckbelastungen auf die seitliche Wandung der Kaverne zu vermeiden.

Dieses wird gemäß der Erfindung durch einen Kugelhaufenreaktor erreicht, der gekennzeichnet ist durch einen Dellenboden der Kaverne mit Dellen in Quadratgitter-Anordnung, deren Kreuzungspunkt-Abstand größer ist als der Kugeldurchmesser.

Weitere Besonderheiten gehen aus den Unteransprüchen hervor. Zur Veranschaulichung dienen die beigefügten Zeichnungen, es zeigen im Schema

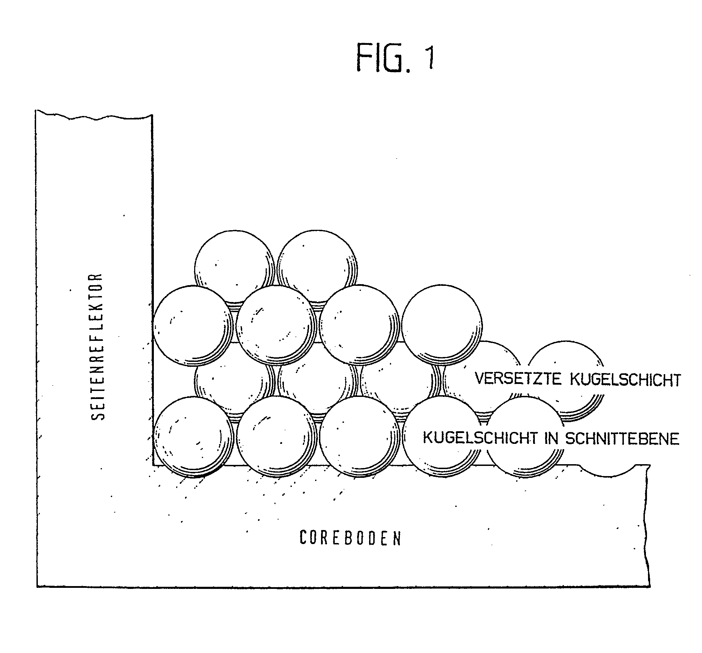

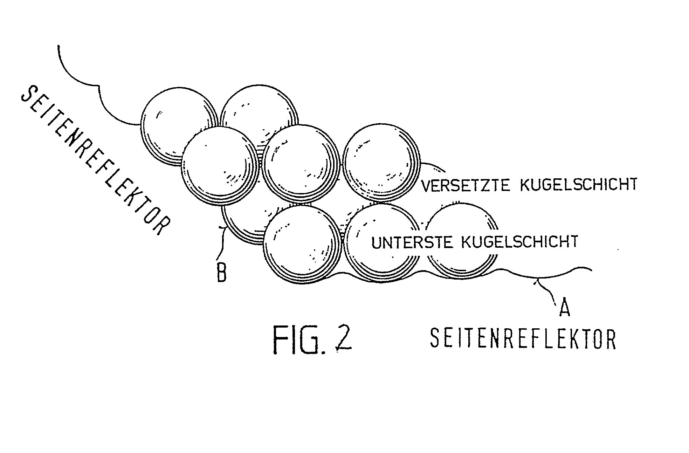

Figuren 1 und 2 Ausschnitte eines Dellbodens und der Seitenwandstruktur

Die aus der thermisch- und strahlungsbedingten Ausdehnung der Brennelemente resultierenden Kräfte haben eine vertikale Komponente, die dem Gewicht der darüber befindlichen Schüttung entgegenwirkt, und eine horizontale Komponente, die zur Belastung der Seitenwand führt. Diese Belastung kann dadurch reduziert werden, daß die Kugeln mit Horizontalspielraum geordnet eingefüllt werden. Diesem Zweck dient der besagte Coreboden mit Dellen in Quadratgitteranordnung und vorzugsweise 1 bis 10% Spiel, insbesondere um etwa 5% zwischen den Kugeln. Dieser anfängliche seitliche Spielraum zwischen den Kugeln erlaubt Kugeldehnungen, ohne daß seitliche Druckkräfte auftreten (siehe Figur 1).

Die Quadratgitter-Anordnung hat den überraschenden Vorteil, daß in der Schüttung der größtmögliche Ordnungszustand erreicht wird, da ausgehend von der den Dellenboden bedeckenden ersten Kugellage, jede nachfolgende Kugel eindeutige Vorzugslagen vorfindet, die mit der gewünschten Soll-Lage zur Erzielung der geordneten Packung übereinstimmen. Auf diese Weise entsteht eine bestmöglich geordnete Kugelpackung, die im übrigen, unter 45° betrachtet, Schichten mit hexagonal dichtester Kugelpackung aufweist und insgesamt zu einem theoretisch ermittelbaren Füllfaktor von 0,74 führt.

Das heißt, auf diese Weise wird der zusätzliche Vorteil einer hohen Leistungsdichte im Core und zudem eine Gleichverteilung der Druckbelastung auf die vorhandenen Kugeln erreicht.

Der erhebliche Unterschied zwischen Kugeldurchmesser und Kavernendurchmesser läßt gewisse Unordnungen in Wandnähe bei einer zylindrischen Kaverne als tolerabel erscheinen.

Gegebenenfalls kann jedoch auch der Kavernenquerschnitt und die Innenwand der Kugelordnung angepaßt ausgebildet werden. So kann die Wand entsprechend ganzzahligen Vielfachen der Kugelabmessung dimensioniert und mit senkrechten Rippen versehen werden, so daß auch benachbart zur Wand geordnete Kugellagen entstehen können. Als Beispiel zeigt Figur 2 ausschnittsweise den Querschnitt eines achteckigen Cores, das – ordnungsbedingt – durch zwei unterschiedliche Wandtypen A und B begrenzt wird. Typ A wird zweckmäßigerweise mit senkrechten Rippen der gezeigten Art versehen, während Typ B glatt oder mit senkrechten Rippen, wie angedeutet, versehen sein kann.

Zur Vermeidung einer nicht gewollten Begünstigung von an sich labilen Kugelpositionen im Randbereich (z.B. Anordnung einer Kugel der versetzten Schicht senkrecht über einer solchen der Unterschicht) sind die Krümmungsradien der zwischen den Rippen gebildeten Rinnen größer als der Kugelradius, wie aus Figur 2 ersichtlich ist.

Ähnlich einfach ausgebildet ist die erforderliche Rippenstruktur bei rechteckigem, allgemeiner bei $2^n$-eckigem Querschnitt der Kaverne (N = 2, 3, 4 ...).

Allgemeiner ergibt sich eine zweckmäßige Wandstruktur aus dem gewählten Grundriß der Kaverne und der diesem einbeschriebenen geordneten Kugelfüllung als (im wesentlichen) Rand-Einhüllende der beiden gegeneinander versetzten Kugelschichten.

## Patentansprüche

1. Kugelhaufenkernreaktor mit chargenweiser Be- und Entladung der Core-Kaverne (Batch-Betrieb), gekennzeichnet durch einen Dellenboden der Kaverne mit Dellen in Quadratgitter-Anordnung, deren Kreuzungspunkt-Abstand größer ist als der Kugeldurchmesser.

2. Kernreaktor nach Anspruch 1, dadurch gekennzeichnet, daß der Kreuzungspunkt-Abstand der Quadratgitter um 1 bis 10%, insbesondere um etwa 5% größer ist.

3. Kernreaktor nach Anspruch 1 oder 2, dadurch gekennzeichnet, daß die (Horizontal)Querschnittsform der Kaverne $2^n$-eckig (mit n = 2, 3, 4, ...) ausgebildet ist.

4. Kernreaktor nach einem der vorangehenden Ansprüche, dadurch gekennzeichnet, daß von der Innenwand senkrechte Rippen vorspringen, welche die Ausbildung einer regulären Kugelschüttung vom Core-Boden bis zur Core-Oberfläche unterstützen.

## Claims

1. Pebble bed nuclear reactor with batch loading and unloading of the core cavern (batch operation), characterized by an indented bottom of the cavern with indentations in square-grid arrangement, the crosspoint spacing of which is greater than the pebble diameter.

2. Nuclear reactor according to Claim 1, characterized in that the crosspoint spacing of the square grids is 1 to 10%, in particular about 5% greater.

3. Nuclear reactor according to Claim 1 or 2, characterized in that the (horizontal) cross-sectional shape of the cavern is of $2^n$-cornered design (where n = 2, 3, 4, ...).

4. Nuclear reactor according to one of the preceding claims, characterized in that perpendicular ribs, which assist the formation of a regular pebble fill from the core bottom to the core surface, project from the inside wall.

## Revendications

1. Réacteur nucléaire à lit de boulets ayant un chargement et un déchargement discontinus de la caverne du cœur (fonctionnement discontinu), caractérisé par un fond bosselé de la caverne, avec des bosses disposées suivant un réseau carré dont la distance entre les points d'intersection est supérieure au diamètre des boulets.

2. Réacteur nucléaire suivant la revendication 1, caractérisé en ce que la distance entre les points d'intersection du réseau carré est plus grande de 1 à 10% et, notamment, de 5% environ que le diamètre des boulets.

3. Réacteur nucléaire suivant la revendication 1 ou 2, caractérisé en ce que la forme de la section transversale (horizontale) de la caverne a $2^n$ sommets (avec n = 2, 3, 4, ...).

4. Réacteur nucléaire suivant l'une des revendications précédentes, caractérisé en ce que des nervures verticales font saillie sur la paroi intérieure et favorisent la constitution d'un tas régulier de boulets du fond du cœur jusqu'à la surface du cœur.

## FIG. 1

SEITENREFLEKTOR

VERSETZTE KUGELSCHICHT

KUGELSCHICHT IN SCHNITTEBENE

COREBODEN

SEITENREFLEKTOR

VERSETZTE KUGELSCHICHT

UNTERSTE KUGELSCHICHT

B

A

FIG. 2

SEITENREFLEKTOR